# EUROPEAN PATENT APPLICATION

(11) **EP 1 170 516 A1**
(43) Date of publication of application: **09.01.2002**
(21) Application number: 01305520.7
(22) Date of filing: 26.06.2001
(51) Int. Cl.: F16B 37/06, F16B 19/10

(54) **Process for protecting an internal thread of a blind rivet**

(30) Priority: 05.07.2000 DE 10032541
(71) Applicant: EMHART INC., Newark, Delaware 19711 (US)
(72) Inventor: Röser, Hermann, 35444 Biebertal (DE)
(74) Representative: Harries, Simon George

(57) **Abstract**

The invention relates to a process for protecting an internal thread (7) of a blind rivet (2) during a second operation, in particular painting, wherein the internal thread (7) is provided with a mandrel (9) having an external thread (12), which mandrel (9) is used for riveting the blind rivet (2) to a workpiece during the first operation, remains in the internal thread during the second operation to protect the same from soiling.

## Description

The invention relates to a process for protecting an internal thread of a blind rivet during an operation, in particular painting.

Processes for protecting an internal thread of a blind rivet during an operation, in particular painting, are known in which the internal thread of the complete rivet is sealed by a stopper-type component in order to protect the internal thread from paint and lacquer particles. Protection of such an internal thread is necessary, as a blind rivet is not used exclusively for connecting workpieces but also for securing components to a workpiece by means of a blind rivet. In the known processes it is disadvantageous that a plurality of steps are necessary in order to protect the internal thread of the blind rivet effectively against soiling, in particular by paints or lacquers. This additional step of sealing the blind rivet by plugging or the like is time-consuming and as a result of the small size of blind rivets it is an activity which demands high precision, in particular if the setting of blind rivets is automated and therefore, in addition to the time-consuming activity, cost-intensive devices are also necessary in order to ensure reliable protection against soiling.

It is the object of the invention therefore to provide a process by which protection of the internal thread is ensured quickly and reliably after setting of the rivet.

This object is achieved according to the invention by a process for protecting an internal thread of a blind rivet during a second step, in particular painting, wherein the internal thread with a mandrel having an external thread, which mandrel is used for riveting the blind rivet to a workpiece during a first operation, remains in the internal thread during the second operation to protect the same from soiling.

In order to use the blind rivet to secure a component after the second operation, for example painting or sandblasting, it is expedient to unscrew the mandrel from the internal thread after this operation in order to finally secure a component to a workpiece during a third operation by means of the blind rivet. In this case it is particularly advantageous to also use the mandrel provided with an external thread to secure the component to the workpiece.

The blind rivet in accordance with EP494747 is particularly suitable for carrying out the process according to the invention as it has a mandrel with external thread which is advantageously provided with a head in which a screwdriver, for example, can engage. The blind rivet in accordance with EP494747 has also proved expedient as the mandrel is provided with a self-cutting external thread and therefore during the screwing in of the blind rivet into the rivet tube an internal thread is cut. This interlocking fit between mandrel and blind rivet on the one hand permits the introduction and exercising of the necessary tensile force to deform the rivet tube and ensures a reliable protection against soiling of the internal thread in a subsequent operation, for example painting or sandblasting. It is, however, also possible to use a mandrel which engages in an existing internal thread.

For the purpose of explaining the invention an embodiment will be described below with the aid of the attached drawings, in which:
Fig. 1 shows a sectional view of the blind rivet after riveting;
Fig. 2 shows a sectional view of the blind rivet according to Fig. 1 after a second operation, for example painting;
Fig. 3 shows a sectional illustration of the blind rivet according to Fig. 1 after removal of the mandrel.

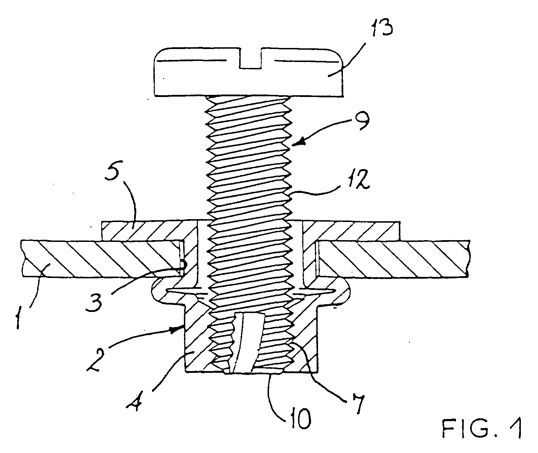

Fig. 1 shows a workpiece 1 which is preferably composed of a sheet metal plate in which a blind rivet 2 is inserted. A hole 3 is worked into the workpiece 1 to receive the blind rivet 2. The blind rivet 2 is composed of a rivet tube 4 and a flange 5 which rests on the workpiece 1. By turning the mandrel 9 into the rivet tube 4 the internal thread 7 is cut and thus an interlocking fit is produced between mandrel and blind rivet 2. A known setting tool is used for setting the blind rivet 2 so riveting, i.e. an interlocking fit is obtained between the blind rivet and the workpiece 1.

After this first operation the workpiece is subjected to a second operation, for example painting or another kind of surface treatment such as sandblasting or the like for example.

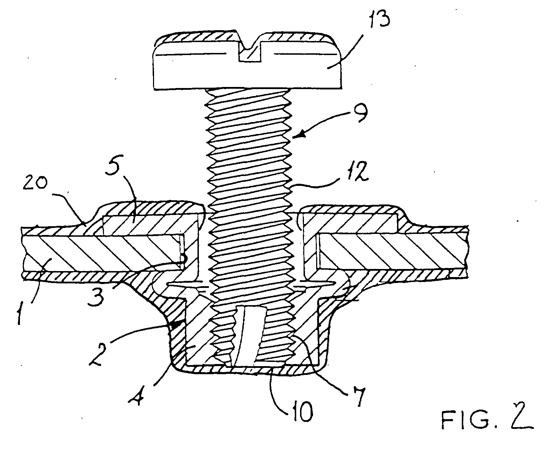

Fig. 2 shows the blind rivet in accordance with Fig. 1, a layer 20 composed of paint and/or lacquer having been applied to the workpiece 1. Whilst the workpiece in Fig. 2 has been treated on both sides, a one-sided treatment, for example painting, is however also conceivable. In particular in the motor industry, one-sided surface painting of components and workpieces only is carried out, if a painting bath is not used.

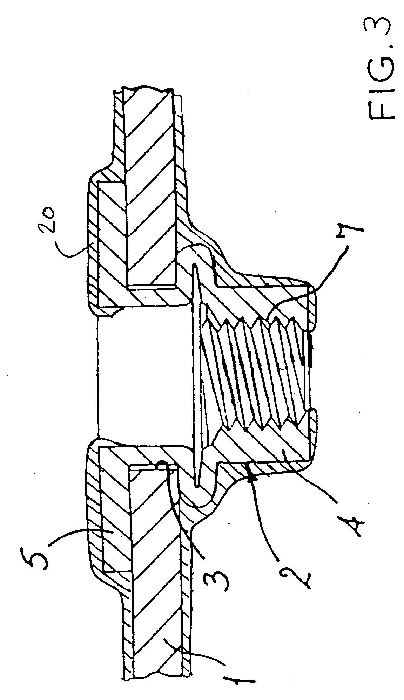

Fig. 3 shows the blind rivet 2 after removal of the mandrel 9, and it can clearly be seen that the lacquer layer 20 does not coat the thread 7 but merely adheres to the edges of the blind rivet. After removal of the mandrel, the mandrel can be screwed into the blind rivet again in conjunction with a securing component to connect the component to the workpiece 1.

## Claims

1. Process for protecting an internal thread (7) of a blind rivet (2) during a second operation, in particular painting, **characterised in that** the internal thread (7) with a mandrel (9) having an external thread (12), which mandrel is used for riveting the blind rivet (2) to a workpiece (1) during a first operation remains in the internal thread during the second operation to protect the same from soiling.

2. Process according to claim 1, **characterised in that** the mandrel (9) is unscrewed from the internal thread (7) of the blind rivet (2) after the second operation.

3. Process according to claim 2, **characterised in that** the mandrel (9) finally secures a component to the workpiece (1) during a third operation by means of the blind rivet (2).
